Europäisches Patentamt

**European Patent Office**

Office européen des brevets

(19)

(11) Publication number: **0 104 903**

**A1**

(12)

# EUROPEAN PATENT APPLICATION

(21) Application number: **83305666.6**

(22) Date of filing: 23.09.83

(51) Int. Cl.³: **C 01 F 7/02**
**C 25 D 1/14, C 25 D 13/02**
**C 04 B 35/10**
**//C09K3/14, C04B31/16**

(30) Priority: 23.09.82 US 422258

(43) Date of publication of application:
04.04.84 Bulletin 84/14

(84) Designated Contracting States:
**BE CH DE FR GB IT LI NL**

(71) Applicant: **Kennecott Corporation**
**Midland Building 101 Prospect Avenue**
**Cleveland Ohio 44115(US)**

(72) Inventor: **Gerk, Alvin P.**
**139 Jackson Street**
**Youngstown New York 14174(US)**

(74) Representative: **Fisher, Bernard et al,**
**Raworth, Moss & Cook 36 Sydenham Road**
**Croydon Surrey CRO 2EF(GB)**

(54) Formation of alumina products from a liquid dispersion through the use of electrophoretic deposition.

(57) A process for the formation of high alumina products using electrophoretic deposition. In the process of the invention, a liquid dispersion comprising from about 0.1 to about 40 weight percent aluminium oxide monohydrate and optionally a dissolved metal-containing sintering aid is formed and placed into an electrophoretic cell having an anode (10) and at least one cathode (15). A D.C. current is applied between said anode (10) and cathode (15) causing the deposit of a precipitate of concentrated aluminium oxide monohydrate material onto the cathode (15). The deposit may then be removed from the cathode (15), dried and fired, with or without a separate calcining step, to produce an alumina product.

*FIG. 1*

Croydon Printing Company Ltd.

# FORMATION OF ALUMINA PRODUCTS FROM A LIQUID DISPERSION THROUGH THE USE OF ELECTROPHORETIC DEPOSITION

This invention relates to alumina products and more particularly to the use of electrophoresis in the formation of high alumina products from an alumina monohydrate liquid dispersion.

The concept of producing alumina based ceramic coatings by electrophoretic deposition is very well known. In the prior art, alumina based coatings were formed by electrophoretically depositing alumina from a dispersion of alumina particles onto an electrode. The electrode was used as the substrate for the generally thin coating, therefore the coating was not removed from the electrode.

The concept of producing a beta alumina product by electrophoretic deposition is known, as illustrated by U.S. 3,896,018 (Powers). Powers discloses the formation of a beta alumina article by electrophoretically depositing beta alumina from a suspension of beta alumina particles onto an electrode. The deposit is then removed from the electrode and subjected to a sintering process to form a dense sintered product.

The concept of producing alumina-based materials useful as abrasives by sol-gel technology is known as illustrated by U.S. Patent No. 4,314,827, U.S. Serial No. 377,782, and U.K. Patent Application No. 8215424 published under No. 2099012A the disclosures of which are incorporated herein by reference. U.S. Patent No. 4,314,827 generally discloses that a calcium ion-free and alkali metal ion-free, dense, non-fused, synthetic, aluminium oxide-based granular abrasive material having randomly oriented crystallites with diameters on the order of 3,000 Angstroms or less can be made by gelling a colloidal dispersion or hydrosol of alumina monohydrate and a modifying component, followed by firing the gel to a temperature of at least 1250°C. U.S.Serial No. 377,782 and U.K. application 8215424 disclose a process for forming an abrasive grain from a sol-gel which contains aluminum oxide monohydrate, a dissolved metal-containing sintering aid and from above .05 to about 1.8 weight percent sodium plus calcium, provided that the weight percent calcium is from 0 to about 1.8 and the weight percent sodium is from 0 to about 0.4. The high sodium and calcium is permitted due to rapid heating of the sol-gel after drying through a temperature range of from below about 800°C to above about 1200°C, prior to sintering the dried gel at a temperature above 1200°C.

In U.S. Patent No. 4,314,827, U.S. Serial No. 377,782 and U. K. application 8215424, high amounts of energy are used to dry the alumina monohydrate gel materials. In addition, during drying of the gel, there is a strong tendency for cracking to occur due to the large shrinkage associated with dehydration. When the sol-gel process is used, acid peptizing and the addition of soluble salts as sintering aids results in relatively high levels of anions which must be removed. In addition to the cost of the acid

-3-

consumed in the sol-gel process the necessity of removing anions during calcining creates environmental problems and increases the tendency for cracking.

Accordingly, it is a principal object of the present invention to provide an electrophoretic process for the formation of an alumina product from an alumina monohydrate liquid dispersion in which very little energy is consumed.

It is another object of the present invention to provide such a process in which there is little cracking of the electrophoretic deposit during drying.

It is another object of the present invention to provide such a process in which an essentially anion-free alumina monohydrate deposit is obtained.

It is a further object of the present invention to provide a continuous process for producing an alumina monohydrate deposit from an alumina monohydrate liquid dispersion.

It is still a further object of the invention to provide an efficient and inexpensive process for the production of alumina materials.

The problems of the prior art are overcome by the discovery that electrophoresis may be used in the formation of high alumina products from an alumina monohydrate liquid dispersion. The alumina materials of the invention may be used for any suitable purpose, i.e., coatings, reactive powders, electronic ceramics, novel structural ceramics, refractories, catalysts and abrasives.

In the process of the invention, a liquid dispersion comprising from about 0.1 to about 40 weight percent aluminum oxide monohydrate is formed and placed into an electrophoretic cell having an anode and at least one cathode. A DC current is applied between said anode and cathode causing the deposit of a precipitate of concentrated aluminum oxide monohydrate material onto the cathode. The concentrate of the precipitate is approximately 50% solids. After deposition, the deposit is dried. This drying step may take place either before or after the deposit is removed from the cathode.

After the deposit is dried, further processing is dependent upon the nature of the desired end product and the particular composition of the deposit. For example, the material may (1) be fired to a temperature of at least $1250^{\circ}C$ for a sufficient time to convert the material to an alpha alumina product; (2) be fired to a temperature up to between about $550^{\circ}C$ and $1200^{\circ}C$ for a sufficient time to convert said solid material to a gamma alumina product; (3) be rapidly heated to above about $1200^{\circ}C$ in less than 10 minutes and then sintered between about $1200^{\circ}C$ and about $1550^{\circ}C$ for a sufficient sintering time to convert said material to an alpha alumina product; or (4) be calcined, then rapidly heated to above about $1200^{\circ}C$ in less than 10 minutes, and sintered between about $1200^{\circ}C$ and about $1550^{\circ}C$ for a sufficient sintering time to convert said material to an alpha alumina product. In the four options above-mentioned, the material can be crushed prior to either the firing step, the rapidly heating step, or the calcining step, in order to produce grains of a desired size to be used, for instance, as abrasives.

In the preferred process of the invention, the liquid dispersion is an aqueous dispersion comprising 5 to 15 weight percent aluminum oxide monohydrate, from about .02 to about 0.25 moles of a volatile acid per mole of aluminum oxide monohydrate, and at least one dissolved metal-containing sintering aid in an atomic ratio of metal in the sintering aid to aluminum in the aluminum oxide monohydrate of from 1:2 to 1:35.

When compared with alumina gel materials formed by the process of U.S. Patent No. 4,314,827 or U.S. Serial No. 377,782 or U.K. Application 8215424, the cathode deposit of the invention is far superior. The cathode deposit is very high in solids content, thus decreasing the shrinkage which takes place during drying. The resultant reduction in cracking allows the cathodes deposit to be made in large, thick sections, thus creating more potential uses of the material. In addition, the higher solids content of the precipitate as generally compared to gels, results in significant energy savings.

The alumina gel materials made in accordance with the preferred processes in U.S. Patent No. 4,314,827, U.S. Serial No. 377,782 and U.K. Application 8215424 contain a significant amount of an anion such as nitrate which is removed during the drying and calcining stages. On the other hand, the cathode deposit in this invention is essentially anion-free, even though the liquid dispersion used in the electrophoresis may have been very high in anion content. The fact that the cathode deposit is essentially anion-free has obvious implications in eliminating potential environmental problems which may be associated with the processes in U.S. Patent No. 4,314,827, U.S Serial No. 377,782 and U.K. application 8215424.

The invention will now be described by way of example with reference to the accompanying drawings in which:

Fig. 1 is a front view of a batch electrophoretic cell of the invention,

Fig. 2 is a front view of a batch electrophoretic cell of the invention, and

Fig. 3 is a front view of a continuous electrophoretic cell of the invention.

In accordance with the process of the invention, the high alumina product is prepared from a liquid (preferably water) dispersion comprising from about 0.1 to about 40 weight percent aluminum oxide monohydrate. The liquid dispersion may be a sol which is a colloidal dispersion or a gel which is a colloidal dispersion with interaction between the particles to form a gel. The dispersion is formed by any suitable means which may simply be mixing of the aluminium oxide monohydrate with water. The liquid is almost always water but may be another liquid in which the aluminum oxide monohydrate will disperse. Any suitable mixing apparatus may be used including both high and low shear mixers.

The quantity of aluminium oxide monohydrate in the dispersion is usually from about 0.1 to about 40 and preferably from about 5 to about 15 percent by weight of the dispersion. Aluminum oxide monohydrate as used herein is intended to include aluminum oxide hydrates having a stoichiometric formula of $\frac{1}{2}(Al_2O_3 \cdot {}^xH_2O)$ where x is 0.5 to 3. Aluminum oxide monohydrate is also known as boehmite. Aluminum oxide monohydrate, as used herein, is also intended to include, without limitation, pseudo boehmite.

A commercially available aluminum oxide monohydrate, which is useful in the present invention, is a byproduct of the Ziegler process for making primary alcohol and is sold under the trade designations "Dispural", and "Catapal". These products are characterized by exceptional purity, high surface area and very small crystallite size. Aluminum oxide monohydrate may also be obtained by the hydrolysis of aluminum alkoxides, by precipitation from sodium aluminate solutions and by other processes.

If an abrasive material is the desired final product, then the liquid dispersion preferably further comprises at least one dissolved metal-containing sintering aid in an atomic ratio of metal in the sintering aid to aluminum in the aluminum oxide monohydrate of from 1:2 to 1:35, and more preferably from 1:7 to 1:25. The sintering aid is a dispersable or soluble metal oxide or metal oxide precursor, i.e., a compound which will form a metal oxide during drying, calcining or sintering. The liquid dispersion may comprise up to 50 weight percent of such sintering aids.

In general, the sintering aid is usually a precursor of magnesium oxide, zinc oxide, cobalt oxide or nickel oxide and is therefore, when the liquid is water, a water soluble or dispersable compound of magnesium, zinc, nickel or cobalt. Specific examples of such precursors are the nitrates and chlorides of those metals. The nitrates of those metals are particularly preferred. The sintering aid may be prepared in situ, for example, by adding magnesium oxide or hydroxide to an aqueous solution of inorganic acid such as hydrochloric or nitric acid to form a water soluble salt of magnesium. The sintering aid is usually a water soluble salt but may be a water soluble base. The preferred sintering aid is magnesium oxide or magnesium nitrate and the preferred amount of magnesium oxide in the alumina product of the invention is between about 2 and about 10 weight percent.

Useful abrasive material is produced when at least one other metal oxide or its precursor is included in addition to at least one of the metal oxides or precursors set forth above. Examples of such other metal oxides include silica, chromia, titania, and zirconia.

The liquid dispersion preferably includes a dispersing aid, such as acid. For example, from about 0.02 to 0.25 and preferably from 0.05 to about 0.15 mole of a volatile acid per mole of aluminum oxide monohydrate greatly aids dispersion. Examples of such acids are nitric, hydrochloric, acetic and formic acids. Nitric acid is preferred, since it appears to provide the greatest stability in the colloidal dispersion of alumina monohydrate.

After the liquid dispersion is formed, it is placed into an electrophoretic cell having an anode and at least one cathode. The cathode comprises an inert conductive material such as platinum, platinum coated titanium, or a conductive, corrosion resistant material such as stainless steel. The anode can either contain a similarly inert conductive material, or instead may comprise a metal which will contribute to the deposit on the cathode. Examples of metals which will contribute to the deposit on the cathode are aluminum, magnesium, nickel, cobalt, and zinc. Different shaped cathodes can be used for various purposes. For instance, if ceramic tubing is the desired product, the cathode should be tubular in form.

After the dispersion is added to the electrophoretic cell, an electrical potential is applied between the anode and the cathode, causing particles from the dispersion to be deposited on the cathode. On the initiation of current flow, cell current is set at about 53.8 to 538 amps per square metre (5 to 50 amps per square foot) of cathode and the voltage drop across the cell is a few volts. As cell resistance increases, the voltage is adjusted to maintain adequate current flow. After the current is allowed to flow for a sufficient time, approximately 5 to 48 hours, the power supply is turned off, disconnected and the cathode removed from the cell.

If a continuous rather than batch electrophoretic cell is used, the cathode is continuously fed through the electrophoretic cell while the electrical potential is applied. In such a continuous process, the cathode preferably comprises a stainless steel or other non-corrosive belt and the anode preferably comprises a platinum or platinum coated conductor. The constant current between the cathode and the anode would be approximately 53.8 to 538 per square metre (5-50 amps per square foot) of active cathode.

When an aqueous dispersion is used, it has been found that the water content of the deposited precipitate consistently appears to be in a narrow range of about 50%, even though a wide variety of both electrical and bath conditions have been employed. In addition, the cathode deposit does not appear to readily dissolve or redisperse.when placed in a beaker of pure de-ionized water. It does, however, redisperse when placed in a weak nitric acid solution.

If the amount of aluminum oxide monohydrate in the dispersion is between 20 and 40 weight percent, it is not only hard to keep the dispersion homogeneous, but there is a tendency for a gel to be formed on top of the deposit on the cathode. On the other hand, if a very low amount, i.e., below about 2 weight percent aluminum oxide monohydrate is used in the dispersion, the efficiency of the electrophoretic cell is substantially decreased.

In either a batch or a continuous process, the cathode deposit may be removed from the cathode either prior to or after drying. "Dried" or "drying", as used herein, means that at least 90 percent of free (unbound) water is removed to form a solid. When the deposit is removed from the cathode, the deposit typically breaks up into large pieces of material. Depending on the degree of care exerted in removing the deposit from the cathode, very large pieces can be obtained. Drying may be accomplished by any means known to those skilled in the art. When heat is used in the drying process, the drying temperature is usually from about 80 to 110°C. The drying time can vary from 1 to about 72 hours at atmospheric pressure depending upon the quantity of water or other liquid present, upon relative humidity, upon drying temperature and upon the desired final product. For example, if the final product is to be an abrasive, the deposit does not have to be dried as slowly as it would for other applications. Drying the deposit slowly, at a fairly low temperature, such as 25$^\circ$C, with controlled humidity, will produce a large product with very few cracks.

If the desired product is alumina particles, to be used, for example, as abrasive grain, then after the deposit is dried and removed from the cathode, it is crushed or broken by any suitable means such as a hammer or ball mill to form particles or grains. Any suitable method for comminuting the solid material may be used and "crushing" is intended to include all such methods.

After the deposit is dried, and if desired, crushed, there are many options as to what to do next with the material, depending on what type of product is desired. An alpha alumina product can be formed by basically following the remaining steps of U.S. Patent No. 4,314,827. In accordance with U.S. Patent No. 4,314,827, after the pieces of material have dried, they are fired to a temperature of at least 1250$^\circ$C. Care must be taken to increase the temperature slowly enough so that the material will not crack. At approximately 600$^\circ$C, essentially all of the chemically bound water will be released from the hydrated alumina. Firing is continued until all the material has reached a temperature of at least 1250$^\circ$C and more typically 1300$^\circ$C. After 3 to 5 hours at 1250$^\circ$C or more, essentially all of the alumina is converted to an alpha alumina product. If an abrasive product, such as an abrasive grain, is desired, the temperature may be raised more rapidly during the calcining process. In addition, if an abrasive product is to be formed by this process, the liquid dispersion should contain below .05 percent by weight total calcium ion and alkali metal ion.

-12-

If a gamma alumina material is the desired product, then the dried deposit should only be fired at a temperature up to between about 550°C and 1200°C, and preferably between 800° to 900°C, for a sufficient time to convert said material to any of the desired crystal structures generally grouped under the term gamma alumina.

An alpha alumina product can also be formed by basically following the remaining steps of U.S. Serial No. 377,782 or U.K. application 8215424. After the deposit is dried, and if desired, crushed, the material is heated to a temperature between about 250°C and about 800°C until essentially all water is removed. "Essentially", as used in this context, means that all free water and over 90 percent of bound water is removed. The calcining time to remove essentially all water varies depending on the desired product. If the desired product is not an abrasive product, the heating rate during calcining should be fairly slow in order that minimal cracking should occur.

After drying and after calcining, the pieces of material are rapidly heated to above about 1200°C. The rapid heating usually occurs in less than 10, preferably less than 5, and most preferably in less than 1 minute. This rapid heating step permits the formation of a superior abrasive grain or other alumina product from a liquid dispersion containing relatively high amounts of calcium and sodium. For instance, a superior abrasive grain may be formed from a liquid dispersion comprising from 0 to about 1.8 weight percent sodium plus calcium, provided that the weight percent calcium is from 0 to about 1.8 and the weight percent sodium is from 0 to about 0.4. Any suitable means or method for rapidly heating the

0104903

-13-

material or grains may be used, such as injection of the material or grains in other than bulk form, i.e., separately, into a furnace preheated to above $1200^{\circ}$C and preferably to above $1300^{\circ}$C.

It is possible to eliminate the calcining step and instead rapidly heat the materials to above about $1200^{\circ}$C after drying. This procedure is particularly desirable for producing certain type abrasives.

After the material is rapidly heated to above $1200^{\circ}$C, it is continued to be heated at a sintering temperature between about $1200^{\circ}$C and about $1550^{\circ}$C, preferably between $1250^{\circ}$C and $1500^{\circ}$C, for a sufficient sintering time to convert the material to an alpha alumina product. At least a portion of the heating usually occurs above $1300^{\circ}$C. Sufficient sintering time depends on sintering temperature, and is usually from about 5 to about 30 minutes but may be less than about 5 minutes, e.g. from about 1 to about 5 minutes.

The alpha alumina materials of the invention are particularly useful as abrasives, and the invention includes bonded, coated and non-woven abrasive articles comprising the abrasive grain of the invention. Said abrasive grain has excellent wear characteristics, maintains a high cutting rate, and removes large quantities of carbon steel stock.

The invention is further illustrated by the following non-limiting examples:

## EXAMPLE I

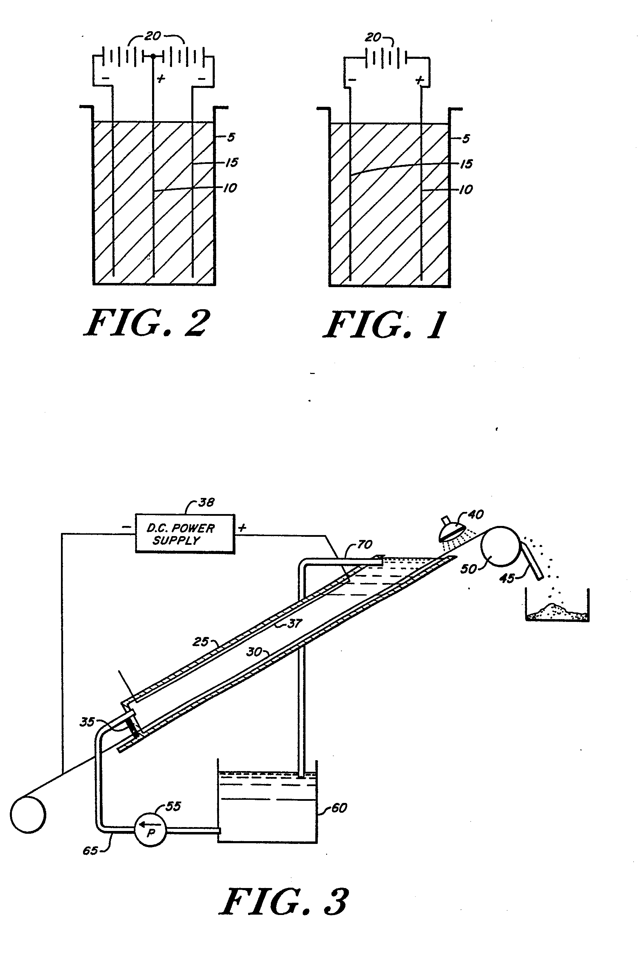

Abrasive grain was manufactured using two types of batch electrophoretic cells as seen in Figs. 1 and 2.

The cell in Fig. 1, consists of a Nalgene tank 5, approximately 12" (304.8 mm) wide by 26" (660.4 mm) long by 22" (558.8 mm) high, into which an anode 10 and a cathode 15 are positioned. Both the anode 10 and cathode 15 consist of commercial aluminum plates approximately 1/4" (6.35 mm) by 22" (558.8 mm) by 24" (609.6 mm) in size. An HBS model M259 D.C. power supply 20 is connected to anode 10 and cathode 15. The cell in Fig. 2 is identical to the cell in Fig. 1, except for the fact that it has two cathodes 15 and two power supplies 20.

In a separate container, an electrophoretic bath containing about .04 moles $HNO_3$ per mole of A100H and having a composition, on an oxide basis of about 98 weight percent alumina, and 2 weight percent magnesia was prepared in the following manner. A slurry of Dispural and water was prepared and peptized with dilute nitric acid. In another container magnesium nitrate was prepared. For this, a magnesium hydroxide slurry was made and sufficient concentrated nitric acid added for full conversion to magnesium nitrate. The magnesium nitrate was then added to the peptized aluminum oxide monohydrate dispersion and sufficiently mixed to insure homogenuity. Ten electrophoretic baths were prepared in the above manner, except that sometimes magnesium nitrate was directly dissolved rather than prepared by adding nitric acid to a magnesium hydroxide slurry. Each bath was then added either to the cell of Fig. 1 or the cell of Fig. 2 and the power supply was turned on. Electrical current was allowed to flow through the cells for approximately 18 hours. The current was periodically adjusted to provide maximum output from the power supplies. On initiation of current flow, the cells typically had a very low resistance. As the precipitate deposited on the cathode, however, the cell resistance increased. On the initiation of current flow, each cell current was set at about 25 amps and the voltage drop across each cell was a few volts. After about 18 hours of current flow, the cell voltage was approximately 10 volts with only a few amps of current.

After approximately 18 hours, the power supplies were turned off, disconnected, and the cathodes removed from the cells. The cathode deposits were washed with water and removed from the cathode with a spatula. On removal from the cathode in this manner, the deposits broke up into pieces up to about 12.7 mm (1/2") in size. At this stage, the deposit had a consistency of a hard waxy substance. The deposit was weighed and tray dried in an oven at $90^{\circ}$C overnight. After drying and reweighing, the deposit of precipitate was found to have lost about 48 percent to 52 percent of its initial weight. The consistency of the dried precipitate was that of a brittle solid. The amount of dried deposit obtained from all the runs was 32 kg (70.6 pounds). The deposits were then crushed, screened, calcined to $575^{\circ}$C, rapidly heated to $1405^{\circ}$C and sintered at $1405^{\circ}$C. After rescreening, a 36 grit abrasive grain was obtained.

## EXAMPLE II

Abrasive grain was prepared using the procedure described in Example I, except that 12 electrophoretic baths, each having a composition on an oxide basis of about 96 weight percent alumina and 4 weight percent magnesia, were prepared and the amount of dried deposit obtained was 28.1 kg (62 pounds).

## EXAMPLE III

Abrasive grain was prepared in accordance with Example I, except that 7 electrophoretic baths, each having a composition on an oxide basis of about 96 weight percent alumina, 3 weight percent magnesia, and 1 weight percent chromia were prepared and the amount of dried deposit obtained was 25.2 kg (55.5 pounds). In order to achieve this bath composition, chromium nitrate was added to the solution of magnesium nitrate and they were both added to the peptized aluminum oxide monohydrate dispersion.

## EXAMPLE IV

Using conventional sandpaper making equipment, the 36 grit abrasive grain from Example I was electrostatically projected onto abrasive grade 0.762 mm (0.030 inch) vulcanized fiber carrying a maker adhesive mix. The abrasive adhesive coated backing was then heated to 79.4°C (175°F) for one hour and 93.3°C (200°F) for two hours in the maker rack. After drying, a size coat was then applied by standard roll coating methods with approximately 10.433 kg/ream (23 lbs/ream) being applied. Drying and curing was then accomplished by heating the coated material for one hour at 65.6°C (150°F), four hours at 79.4°C (175°F), and 16 hours at 107.2°C (225°F).

After curing, the material was humidified in the conventional manner to a moisture content of less than 8% by weight. The material was then uniformly flexed and die cut into a 17.78 cm (seven inch) disc. The 36 grit abrasive grains from Example II and the 36 grit abrasive grains from Example III were similarly used to make two 17.78 cm (seven inch) coated fiber discs.

These three discs were then evaluated on a conventional pneumatic disc grinder using quenched and tempered 4140 steel (hardness 285-320 BHN) as a workpiece and compared to a control disc made and handled in exactly the same manner except the abrasive grain was standard 36 grit brown alumina (brown). In these tests, the abrasive disc was placed on the disc grinder in the standard manner and a 25.4 x 50.8 x 279.4 mm (1x2x11 inch) workpiece was positioned so that it engaged the disc on the 25.4 mm (1 inch) flat side at a 10-15° angle. The disc was passed back and forth along the workpiece.

The abrasive discs in these tests were rotated at a nominal 5400 RPM's on a hard rubber type back-up pad 17.78 cm (7") in diameter. 3.63 kg (eight pounds) of dead weight in-feed force was exerted on the workpiece. Testing was for 30 seconds after which stock removed from the bar was measured (weight before grind-weight after grind) and recorded. This sequence was continued until the measured stock removed was 5 grams or less per grinding interval. Total stock removed in this manner for the test discs was compared to the total stock removed for the control disc. (Relative cutting performance.) The results of these tests can be seen in Table 1.

TABLE I

| Example | No. Discs in Test | Avg. Cut (gm) | Std. Deviation (gm) |
|---------|-------------------|---------------|---------------------|
| I | 6 | 228 | 23.7 |
| II | 6 | 207 | 27.2 |
| III | 6 | 182 | 29.9 |
| brown | 7 | 122 | 20.8 |

EXAMPLE V

A material suitable for use as an abrasive grain was produced in the continuous electrophoretic deposition machine shown in Fig. 3. The device consists of a plexiglass rectangular chamber 25, approximately 15.24 cms (6") square and 152.4 cm (60") long. A 0.0762 mm (0.003") thick by 12.7 cm (5") wide stainless steel belt 30 was used as a cathode onto which material was deposited. This belt 30 entered the bottom of the chamber 25 through a rubber sliding liquid seal 35 and exited at the chamber top. The platinum wire 37 running the full length of the chamber face opposite the cathode belot 30 was used as an anode. A constant current, D.C. power supply 38 was connected between the platinum wire anode 37 and the stainless steel cathode belt 30. Heat lamps 40 were used to dry deposited material on the belt and a doctor-blade 45 was used to remove dried deposit into a collection pan. The take-up spool 50 on the exit end of the belt 30 had a variable speed drive motor attached.

An electrophoretic bath having a composition on an oxide basis of about 97 weight percent alumina and 3 weight percent magnesia was prepared according to the procedure of Example I. The electrophoretic bath was continuously pumped by pump 55 from a large reservoir 60 through conduit 65 into the bottom of the chamber 25. The electrophoretic bath was allowed to overflow at the top of the chamber 25 into conduit 70 for return to the reservoir 60.

After the bath was poured into the reservoir 60 and the deposition chamber 25 filled with liquid which was continuously circulated between chamber and reservoir, the belt drive was turned on and belt velocity adjusted to 25.4 mm (one inch) per minute. The constant current power supply connected between the cathode belt 30 and wire anode 37 was turned on and adjusted to 20 amps. Shortly after current was allowed to flow between the anode 37 and the cathode 30, a thin layer of waxy deposit could be detected on the belt as it exited the electrophoretic bath. The deposited layer exiting the bath continued to increase in thickness for approximately one hour (the time it takes a portion of the belt to move through the full length of the chamber). Afterwards, the thickness of the waxy deposit remained relatively constant at between 0.99 mm and 1.067 mm (.039 and .042 inches). After approximately one hour, the voltage drop across the cell remained roughly constant at between 21.5 and 22.0 volts. The machine was run for about three hours and the dried deposit collected for physical characterisation. The material produced in this example was not used in grinding tests; however, its physical characteristics were very similar to the experimental abrasives described as Examples I and II.

Although this invention has been described with reference to its preferred embodiment, other embodiments can achieve the same results. Variations and modifications of the present invention will be obvious to those skilled in the art and it is intended to cover in the appended claims all such modifications and equivalents as follow in the true spirit and scope of this invention.

0104903

-20-

CLAIMS:

1.   A process for the production of an alpha alumina product which comprises the steps of:-

(a)   forming a liquid dispersion comprising from about 0.1 to about 40 weight percent aluminium oxide monohydrate;

(b)   placing the dispersion into an electrophoretic cell having an anode and at least one cathode;

(c)   applying an electrical potential between said anode and cathode to cause particles from the dispersion to be deposited on the cathode;

(d)   drying the deposit; and

(e)   firing said dried deposit to a temperature of at least 1250°C for a sufficient time to convert said material to an alpha alumina product.

2.   A process for the production of a gamma alumina product which comprises the steps of:

(a)   forming a liquid dispersion comprising from about 0.1 to about 40 weight percent aluminium oxide monohydrate;

(b)   placing the dispersion into an electrophoretic cell having an anode and at least one cathode;

(c)   applying an electrical potential between said anode and cathode to cause particles from the dispersion to be deposited on the cathode;

-21-

(d)   drying the deposit; and

(e)   firing said dried deposit to a temperature up to between about 550$^{\circ}$C and 1200$^{\circ}$C for a sufficient time to convert said material to a gamma alumina product.

3.   A process for the production of an alpha alumina product which comprise the steps of:

(a) forming a liquid dispersion comprising from about 0.1 to about 40 weight percent aluminium oxide monohydrate and at least one dissolved metal-containing sintering aid in an atomic ratio of metal in the sintering aid to aluminium in the aluminium oxide monohydrate of from 1:2 to 1:35;

(b)   placing the dispersion into an electrophoretic cell having an anode and at least one cathode;

(c)   applying an electrical potential between said anode and cathode to cause particles from the dispersion to be deposited on the cathode;

(d)  drying the deposit;

(e)   rapidly heating the dried deposit to above about 1200$^{\circ}$C in less than 10 minutes, and

(f)   continuing to heat the material at a sintering temperature between about 1200$^{\circ}$C and about 1550$^{\circ}$C for a sufficient sintering time to convert said material to an alpha alumina product.

0104903

-22-

4. A process according to Claim 3 further including, prior to the rapidly heating step, the step of calcining the dried deposit.

5. A process according to Claims 1, 2, 3 or 4, wherein in step (c), the cathode is continuously fed through the electrophoretic cell while the electrical potential is applied.

6. A process according to Claim 5 wherein the cathode comprises a stainless steel belt.

7. A process according to Claims 1, 2, 3 or 4 wherein in step (a) the liquid dispersion comprises 5 to 15 weight percent aluminium oxide monohydrate.

8. A process according to claims 1, 2, 3 or 4 wherein in step (a) the liquid dispersion comprises an aqueous dispersion.

9. A process according to Claims 1, 2, 3 or 4 wherein the deposit is removed from the cathode prior to the drying step.

10. A process according to Claims 1, 2, 3 or 4 wherein the deposit is removed from the cathode after the drying step.

11. A process according to Claims 1 or 2 further including, prior to the firing step, the step of crushing the dried deposit to produce grains of a desired size.

12. A process according to Claim 3 further including, prior to the rapidly heating step, the step of crushing the dried deposit to produce grains of a desired size.

13. A process according to Claim 4 further including, prior to the calcining step, the step of crushing the dried deposit to produce grains of a desired size.

14. A process according to Claims 1 or 2 wherein in step (a) the liquid dispersion further comprises at least one dissolved metal-containing sintering aid with an atomic ratio of metal in the sintering aid to aluminium in the aluminium oxide monohydrate of from 1:2 to 1:35.

15. A process according to Claim 14 wherein the atomic ratio of metal in the sintering aid to aluminium in the aluminium oxide monohydrate is from 1:7 to 1:25.

16. A process according to Claims 3 or 4 wherein the atomic ratio of metal in the sintering aid to aluminium in the aluminium oxide monohydrate is from 1:7 to 1:25.

17. A process according to Claim 14 wherein the sintering aid is a compound of magnesium, zinc, nickel or cobalt.

18. A process according to Claims 3 or 4 wherein the sintering aid is a compound of magnesium, zinc, nickel or cobalt.

19. A process according to Claim 17 wherein the sintering aid is prepared in situ from magnesium oxide or magnesium hydroxide and an inorganic acid.

20. A process according to Claim 18 wherein the sintering aid is prepared in situ from magnesium oxide or magnesium hydroxide and an inorganic acid.

21. A process according to Claims 19 or 20 wherein the alumina product comprises between about 2 and about 10 weight percent magnesium oxide.

22. A process according to Claim 17 wherein the sintering aid is magnesium nitrate.

23. A process according to Claim 18 wherein the sintering aid is magnesium nitrate.

24. A process according to Claim 14 wherein at least one precursor of at least one component selected from the group consisting of:-

(i)   silica, chromia, titania, or zirconia, and at least one precursor of at least one component selected from the group consisting of

(ii)  magnesium oxide, zinc oxide, nickel oxide or cobalt oxide

is added to the liquid dispersion of step (a) in colloidal or dissolved form, said precursors being present in an amount up to 50 weight percent of solids in the dispersion.

25. A process according to Claims 3 or 4 wherein at least one precursor of at least one component selected from the group consisting of:-

(i)   silica, chromia, titania or zirconia, and at least one precursor of at least one component selected from the group consisting of

0104903

-25-

(ii)    magnesium oxide, zinc oxide, nickel oxide
or cobalt oxide

is added to the liquid dispersion of step (a) in
colloidal or dissolved form, said precursors being
present in an amount up to 50 weight percent of solids
in the dispersion.

26. A process according to Claims 1, 2, 3 or 4
wherein in step (a) from about 0.02 to about 0.25
moles of a volatile acid per mole of aluminium oxide
monohydrate is added as a dispersing aid to the
dispersion.

27. A process according to Claim 26 wherein the acid
is nitric acid.

28. A process according to Claims 1, 2, 3 or 4
wherein the cathode comprises inert metal.

29. A process according to Claims 1, 2, 3 or 4
wherein the anode comprises inert metal.

30. A process according to Claims 1, 2, 3 or 4
wherein the anode comprises a metal which will
contribute to the deposit on the cathode.

31. A process according to Claim 30 wherein the metal
comprising the anode is selected from the group
consisting of aluminium, magnesium, nickel, cobalt or
zinc.

32. A process according to Claims 1, 2, 3 or 4
wherein the cathode is tubular in form.

33. A process according to Claim 4 wherein the
material is calcined at a temperature of from about 250°C to about 800°C until essentially all water is removed.

34. The process of Claims 3 or 4 wherein the sufficient sintering time is from about 5 to about 30 minutes.

35. A process according to Claims 3 or 4 wherein the sufficient sintering time is less than 5 minutes.

36. A process according to Claims 3 or 4 wherein the sintering temperature is between 1250°C and 1500°C.

37. A process according to Claims 3 or 4 wherein at least a portion of said sintering occurs above 1300°C.

38. A process according to Claims 3 or 4 wherein the rapid heating occurs in less than 5 minutes.

39. A process according to Claim 38 wherein the rapid heating occurs in less than one minute.

40. A product manufactured in accordance with a process according to any one of Claims 1 to 39.

**FIG. 2**   **FIG. 1**

**FIG. 3**

European Patent Office

**EUROPEAN SEARCH REPORT**

Application number

| | | | EP 83305666.6 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | <u>US - A - 3 976 554</u> (POWERS et al.)  <br> * Totality *  <br> -- | 1 | C 01 F 7/02 <br> C 25 D 1/14 <br> C 25 D 13/02 |
| D,A | <u>US - A - 4 314 827</u> (LEITHEISER et al.)  <br> * Claims; examples *  <br> -- | 1,3, 17-25, 36,37 | C 04 B 35/10// <br> C 09 K 3/14 <br> C 04 B 31/16 |
| A | <u>US - A - 2 966 449</u> (G.H. BOUCHARD et al.)  <br> * Totality *  <br> ---- | 1 | |

|  |
|---|
| TECHNICAL FIELDS SEARCHED (Int. Cl. ³) |
| C 25 D <br> C 04 B <br> C 01 F 7/00 <br> C 09 K <br> B 24 D |

The present search report has been drawn up for all claims

| Place of search <br> VIENNA | Date of completion of the search <br> 21-12-1983 | Examiner <br> PAMMINGER |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document